# EUROPÄISCHE PATENTSCHRIFT

(11) **EP 2 818 256 B1**
(45) Veröffentlichungstag und Bekanntmachung des Hinweises auf die Patenterteilung: **04.11.2015**
(21) Anmeldenummer: 13173958.3
(22) Anmeldetag: 27.06.2013
(51) Int. Cl.: B09B 1/00, B09B 3/00, B29B 7/84, B65G 5/00

(54) **Verfahren und Vorrichtung zum Aufbereiten von Stoffen für den Bergversatz**
Method and device for the processing of substances for backfilling
Procédé et dispositif de préparation de substances pour le remblai de mines

(43) Veröffentlichungstag der Anmeldung: 31.12.2014
(73) Patentinhaber: MINERALplus GmbH, 45966 Gladbeck (DE)
(72) Erfinder: Andresen, Dietmar, 58640 Iserlohn (DE); Roll, Jürgen, 46244 Bottrop (DE)
(74) Vertreter: Zenz Patentanwälte Partnerschaft mbB

(56) Entgegenhaltungen:
- EP-A1- 0 320 393
- DE-A1-102004 052 854
- US-A- 3 250 061
- US-A- 5 463 172

## Beschreibung

Die Erfindung betrifft ein Verfahren für den Betrieb von Bergversatzanlagen. Insbesondere betrifft die Erfindung ein Verfahren für den Versatz mit Stoffen, welche ein signifikantes Wasserstoffbildungspotential aufweisen.

Es ist bekannt, verschiedene Ausgangsmaterialien im Bergversatz, zum Beispiel dem Kavernenversatz zu verwenden. Als Ausgangsmaterialien kommen insbesondere industrielle Abfälle körniger bis feinstkörniger Struktur zum Einsatz. Diese sind beispielsweise Filterstäube aus Müllverbrennungsanlagen, aus Kraftwerken oder aus Klärschlammverbrennungsanlagen und anderen thermischen Prozessen, wie z. B. aus der metallerzeugenden und - verarbeitenden Industrie.

Mischungen aus einer Anmischflüssigkeit und partikelförmigen Feststoffen zum Versatz sind dabei bekannt. Diese Mischungen, die auch als Baustoffsuspensionen bezeichnet werden, zeichnen sich üblicherweise dadurch aus, dass auf Grund der komplexen Suspensionsstruktur, wesentlich hervorgerufen durch einen hohen Feststoffgehalt, die klassischen Fließgesetze nach Newton, Ostwald oder Bingham keine Anwendung finden können. Die Baustoffsuspensionen zeigen eine empfindliche Abhängigkeit der Fließeigenschaften vom Feststoffgehalt und den Schwankungen in der Zusammensetzung der partikelförmigen Feststoffkomponenten sowie deren Reaktionspotential, was übliche technische Dosier- und Pumpeinrichtungen überfordert. Die Baustoffsuspensionen zeigen häufig ein thixotropes Verhalten mit sehr hohen Fließgrenzwerten, so dass in der Regel zur Förderung dieser Baustoffsuspensionen aufwendige Apparate, insbesondere sehr starke Pumpen, eingesetzt werden müssen.

Der Bergversatz mit Baustoffsuspensionen aus Abfällen sorgt einerseits für einen dauerhaften Abschluss der Versatzstoffe, verhindert damit einen Kontakt der möglicherweise schadstoffhaltigen Abfälle mit dem Ökosystem und erfüllt außerdem den Bedarf der Hohlraumverfüllung. Insbesondere durch letztere Vorteile wird das geomechanische System untertägiger Hohlräume langfristig stabilisiert und gesichert. Derartige Versatzstoffe werden mit zugelassenen Rezepturen produziert, um die Unbedenklichkeit der Stoffe am Bestimmungsort sicherzustellen. Dazu werden Ausgangsstoffe gemäß dieser Rezepturen gemischt.

In der Patentschrift DE 3 411 998 wird beispielsweise ein Verfahren zum Einbringen von festen Abfällen in Salzkavernen beschrieben. Dabei wird der Abfall mit aus der Kaverne selbst entnommener Steinsalzlösung zu einem pumpfähigen Gemisch verarbeitet und in die Kaverne eingefüllt. Anschließend wird eine Ruhezeit eingehalten, während der sich die festen Abfallstoffe am Boden der Kaverne absetzen und anschließend wird über dem abgesetzten Sediment erneut Lösung abgezogen, so dass wiederum Gemisch hergestellt und eingefüllt werden kann.

Die Patentschrift EP 1 994 995 betrifft ein Verfahren zur Verwahrung von lösungserfüllten Kavernen durch Unterschichten mit industriellen Abfällen. Das dort beschriebene Konzept gibt auch den Ausgangspunkt für diese Erfindung wieder. Zunächst wird Sole aus einer Kaverne entnommen und zur Herstellung einer fließfähigen und pumpbaren Feststoffsuspension angemischt. Zur Herstellung der Feststoffsuspension werden vorzugsweise partikelförmige Rückstände aus der Müllverbrennung eingesetzt. Die so aufbereitete Feststoffsuspension wird danach über eine Förderrohrtour in den Hohlraum eingeleitet, wo sie am Hohlraumboden sedimentiert und nach Abschluss der Sedimentationsphase zu einem festen Füllkörper aushärtet, der in der Lage ist, den geostatischen Gebirgsdruck auf Dauer aufzunehmen und zu übertragen und durch Verhinderung der Konvergenz die endgültige, dauerhafte Stabilisierung des Hohlraums herbeizuführen. Die Verfestigung wird vorrangig durch die Eigenschaften des eingesetzten partikelförmigen Feststoffes in Verbindung mit der NaCl-Lösung oder gegebenenfalls durch Zugabe eines Bindemittels in geringen Mengen erreicht.

Weitere Druckschriften, welche sich dem Thema des Bergversatzes widmen, sind beispielsweise die EP 0 320 393, die EP 0 291 946, die EP 0 230 913 und auch die DE 10 2004 052 854.

Es hat sich jedoch gezeigt, dass insbesondere bei der Verwertung von Verbrennungsrückständen und Filterstäuben bei der Herstellung einer verfüllbaren Baustoffsuspension Probleme durch Freisetzung von Wasserstoff auftreten. Die Abfälle, z.B. Flugstäube aus Verbrennungsanlagen entstammen einem thermischen Prozess, bei dem nicht alle oxidierbaren Bestandteile des Brennstoffs erfasst werden. Gleiches ist von Filterstäuben aus der Herstellung und Verarbeitung von Aluminium in thermischen Prozessen bekannt. Ein Teil der metallischen Anteile kann während des Prozesses im reduzierten Zustand verharren oder wird unter entsprechenden Bedingungen reduziert. Sobald diese Substanzen mit Wasser angemacht werden, um eine Baustoffsuspension zu bilden, wird Wasserstoffgas freigesetzt.

Es ist aber gefordert, dass die Ausgasungen vor der Einbrigung in die unterirdischen Hohlräume weitgehend abgeschlossen sind. Andernfalls würde Wasserstoff in den untertägigen Hohlräumen freigesetzt und führt dort insbesondere zu sicherheitstechnischen Beeinträchtigungen.

In bekannten Versatzanlagen wird daher das Versatzmaterial in Behältern mit Rührwerken gerührt, bis die Wasserbildung zu einem wesentlichen Teil abgeschlossen ist. Erst dann wir das Material in die unterirdischen Hohlräume verfüllt. Die Dauer dieses Rührvorgangs und des Ausgasens stellt einen wesentlichen Beitrag zur Gesamtdauer des Versatzverfahrens dar.

Aufgabe der Erfindung ist es, den Durchsatz einer Versatzanlage gegenüber bekannten Anlagen zu erhöhen. Die Aufgabe wird erfindungsgemäß gelöst durch ein Verfahren mit den Merkmalen des Patentanspruchs 1.

Gemäß dem erfindungsgemäßen Verfahren wird die Ausgasung in Behältern mit thermischer Isolation durchgeführt. Es hat sich nämlich gezeigt, dass durch Temperaturerhöhung des Ausgasungsprozesses nicht nur die Zeitdauer bis zum Erhalt eines vorgegebenen Wasserstoffvolumens drastisch reduziert werden kann. Außerdem wird durch eine Erhöhung der Temperatur die insgesamt erreichte Wasserstoffausbeute wesentlich erhöht.

Es ist zwar bekannt, dass bei chemischen Reaktionen eine Temperaturerhöhung grundsätzlich mit einer Erhöhung der Reaktionsgeschwindigkeit einhergeht (siehe z. B. RGT-Regel). Allerdings zeigt die erfindungsgemäß gewonnene Erkenntnis, dass auch die endgültige Wasserstoffausbeute mit der Temperatur zusammenhängt, dass ein vollständigeres Ausgasen bei gleichzeitiger Zeitverringerung erreicht wird. Mit anderen Worten, der Ausgasungsgrad der erfindungsgemäß erreicht wird, könnte mit den herkömmlichen Einrichtungen nicht erreicht werden.

Dass erfindungsgemäß eine thermische Isolierung gegen thermische Verluste bei den Ausgasungsbehältern derart wirksam ist liegt daran, dass die Wasserstoffbildung und Reaktion bei Kontakt mit den Suspensionsmittel eine exotherme Reaktion ist. Bereits die Reduzierung der Wärmeverluste der Behältern, die bei allen üblichen Anlagen thermisch unisoliert sind, hat zu einer erheblichen Zeitverkürzung des Vorganges bei gleichzeitiger vollständigerer Ausgasung geführt. Die Behälter können dabei weiterhin mit Rührwerken ausgestattet sein. Zur vollständigen Durchmischung und weiteren Reaktionsbeschleunigung ist dies im Rahmen der Erfindung bevorzugt. Durch die chemischen Reaktionen selbst wird die Temperatur im erfindungsgemäß isolierten Behälter dabei üblicherweise um einige 10°C erhöht.

Das gesamte Verfahren wird auf diese Weise ohne zusätzlichen Energieeinsatz verkürzt und effizienter. Als thermische Isolierung kommen hierbei gängige Isolationsmaterialien für Industrieanlagen in Frage. Insbesondere können die Behälter mit Schaumstoffen verkleidet oder eingeschäumt werden. Auch die Ausbildung eines Behälters, der bereits integral mit einer thermischen Isolierung versehen ist, z.B. doppelwandig ausgebildet ist, kann eingesetzt werden.

Die ausgegasten Suspensionen können erfindungsgemäß einer weiteren Verarbeitung direkt als Suspension oder einer Trocknung oder teilweisen Trocknung zugeführt werden. Das Material ist dann in jedem Fall für eine Einbringung in einen unterirdischen Hohlraum, sei es durch einpumpen oder andersartiges Einbringen, aufbereitet.

In einer Weiterbildung der Erfindung wird neben der thermischen Isolierung des Behälters außerdem eine zusätzliche Beheizung des Behälters oder dessen Inhalts vorgenommen. Diese Heizung kann über eingebrachte Heizelemente in der Wandung oder am Boden des Behälters oder durch ein beheiztes Rührwerk erfolgen. Außerdem kann das Suspensionsmittel vorgeheizt in den Behälter eingefüllt werden, wo es aufgrund der exothermen Reaktionen und der thermischen Isolierung in erheblich stärkerem Maße zur Steigerung der Reaktionsgeschwindigkeit und Ausgasungsausbeute beiträgt.

Erfindungsgemäß ist es demnach wesentlich, dass eine Ausgasung der Baustoffsuspension in einer thermisch isolierten Umgebung, ggf. unter Zuheizung erfolgt. Dabei kann die Baustoffsuspension bereits vollständig gemischt in die Behälter zum Ausgasen eingebracht werden. Die bekannten Mischverfahren zur Herstellung einer solchen Baustoffsuspension sind im Stand der Technik bekannt, beispielhaft wird hier auf die Patentschrift DE 10 207 969 verwiesen, aus der entsprechende Herstellungsverfahren bekannt sind.

Die Art des Hohlraumes, der für die Verfüllung vorgesehen ist, ist gemäß der Erfindung beliebig. Es kann sich um leere Hohlräume oder Flüssigkeitsgefüllte Hohlräume handeln. Beispielsweise kann nach dem Ausgasungsprozess die Dickstoffsuspension in eine Kaverne verfüllt werden, wobei vorhandene Flüssigkeiten in der Kaverne, insbesondere vorhandene Sole, unterschichtet werden können. Im Falle der flüssigkeitsgefüllten Kavernen verhindert das vollständig ausgegaste Material dann, besser als bisher erreichbar, eine Beunruhigung oder Durchmischung von Dickstoffversatzmaterial und Flüssigkeit durch weiteres Ausgasen. Dies ist insbesondere dann relevant, wenn in einer Ausgestaltung der Erfindung überschüssige Flüssigkeit in Gestalt von Sole in der Kaverne nicht nur zu einer Anmischung weiterer Dickstoffsuspension verwendet wird, sondern auch anderer Verwendung zugeführt wird.

Vorzugsweise wird die Baustoffsuspension während der Ausgasungsphase auf eine Temperatur gebracht, die wenigstens 20°C, vorzugsweise wenigstens 40°C über der Umgebungstemperatur des Behälters liegt. Im Rahmen von Messungen zu der Erfindung wurde gezeigt, dass bei einer Temperaturerhöhung der Ausgasungsbehälter von 20°C auf 40°C einerseits die Ausgasungszeit bis zum Erhalt der bei 20°C erreichbaren Wasserstoffausbeute erheblich reduziert wurde, außerdem wurde etwa 50 % mehr Gesamtgasmenge an Wasserstoff freigesetzt. Vergleichsmessungen bei 20°C einerseits und 70°C andererseits zeigten eine Ausgasung bei über 1.000 Minuten bei 20°C und weniger als 20 Minuten bei 70°C (die Messung erfolgte, bis keine signifikante Wasserstoffausgasung mehr stattfand).

Es ist entsprechend ersichtlich, dass sowohl die Geschwindigkeit der Ausgasung und Aufbereitung des Baustoffes als auch dessen Unbedenklichkeit und Handhabbarkeit bei der weiteren Verarbeitung im Bergversatz verbessert werden. Unabhängig davon, wie die ausgegaste Baustoffmischung weiter verwendet wird, ob Sie getrocknet, teilgetrocknet oder als Suspension zum Bergversatz genutzt wird und ob sie in leere Hohlräume oder flüssigkeitsgefüllte Hohlräume eingebracht wird, sind diese Schritte durch die Verbesserung der Ausgasung der Stoffe einfacher, sicherer und rascher vorzunehmen.

Im Rahmen der Erfindung sind zahlreiche Abwandlungen möglich. Wesentlich ist für die Erfindung, dass die Ausgasung von Baustoffsuspensionen mit Wasserstoffbildungspotenzial verkürzt und in ihrer Effizienz verbessert wird, indem die thermischen Verluste der ausgasenden Suspension vermindert werden, so dass eine verbesserte Selbstaufheizung der Suspension durch die exothermen Reaktionen möglich ist. Die Temperatur er Suspension kann in Weiterbildungen der Erfindung zusätzlich durch Energiezufuhr erhöht werden. Ist bei der erfindungsgemäß behandelten Suspension das Wasserstoffbildungspotenzial reduziert, kann eine weitere Verarbeitung in beliebiger Weise erfolgen.

Das nachfolgende Beispiel zeigt in nicht-beschränkender Weise die Anwendung der Erfindung im speziellen Fall einer Kavernenverfüllung einer solegefüllten Kaverne. Dies wird nun anhand der beiliegenden Zeichnung näher erläutert.

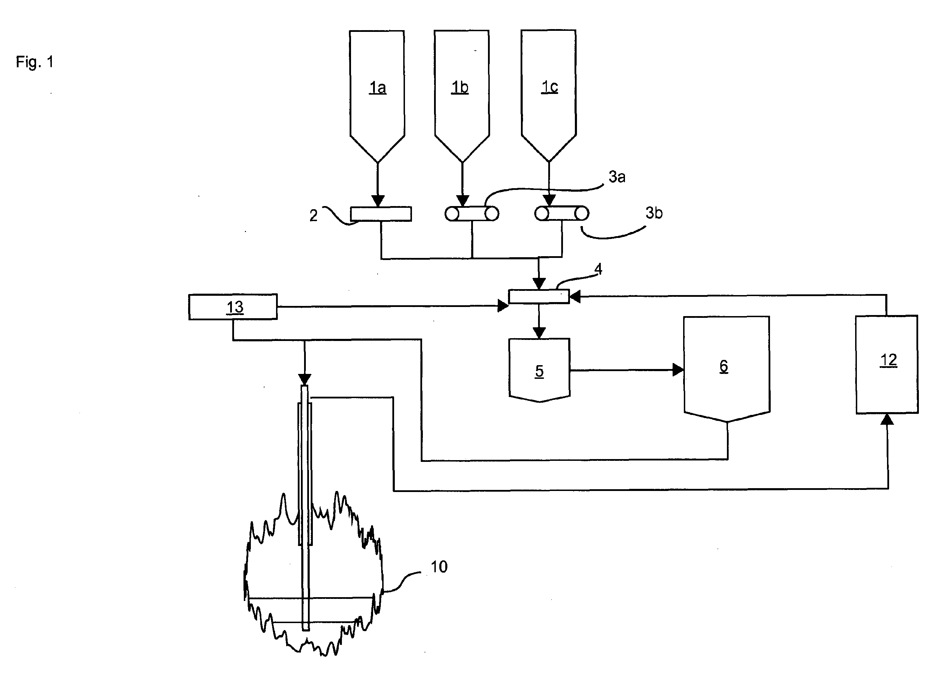

Dabei zeigt die Figur 1 eine schematische Darstellung einer Versatzanlage gemäß der Erfindung.

Figur 1 zeigt eine schematische Darstellung einer Versatzanlage.

Die in Figur 1 dargestellte Versatzanlage ist in ihren wesentlichen Komponenten dargestellt.

Hier sind drei Aufnahmesilos für externe Stoffgruppen mit dem Referenzzeichen 1a, 1b, 1c dargestellt, welche angelieferte Versatzstoffe und Mischungskomponenten für die Baustoffmischung aufnehmen. In anderen Ausführungsformen können auch mehr oder weniger Aufnahmesilos verwendet werden. Eine Dosier-Wiegeeinrichtung 2, 3a, 3b sind unter den Silos angeordnet, um eine zugelassene und geeignete Mischung der Komponenten aus den Silos 1a, 1b und 1c hinsichtlich der Gewichtsbestandteile bereitzustellen.

Die dosierten Komponenten gelangen über die Dosier-Wiegeeinrichtung 2, 3a, 3b zur Durchmischung in einem Vormischer 4. In diesem Mischer 4 findet eine Durchmischung der Komponenten statt, wobei der Vormischer kontinuierlich befüllt wird und eine Mischung kontinuierlich abgibt. Im Vormischer wird dem Gemisch das Suspensionsmittel in Gestalt einer Solelösung zugeführt.

Die fertige Baustoffsuspension gelangt in einen Vorbehälter 5 mit Rührwerk und von da aus in einem mit Rührwerk versehenen Behälter für Baustoffsuspension 6. In diesem Behälter wird die Baustoffsuspension gerührt und dort erfolgt die Ausgasung des Wasserstoffes. Da die Baustoffmischung Wasserstoffbildungspotential aufweist und eine Wasserstoffentwicklung nach Zusatz des Suspensionsmittels erfolgt, kommt es auch bereits im Behälter 5 zur Ausgasungen, dort ist die Verweildauer jedoch nicht lang genug, um eine ausreichende Ausgasung zu gewährleisten.

Der Behälter 6 ist in dieser erfindungsgemäßen Ausführungsform mit einer thermischen Isolation versehen. Als Material für die Isolation wird herkömmliches Dämmmaterial verwendet, welches in dieser Ausführungsform die Rührbehälter außen umgibt. Beispielsweise ist hierbei Polystyrol-Extruderschaum oder extrudierter Polystyrol-Hartschaumstoff - kurz XPS - verwendbar. XPS ist wasserabweisend, sehr gut wärmedämmend und schwer entflammbar. Ebenso können auch Mineralwolleprodukte, Styropor oder Polyurethanprodukte eingesetzt werden. Insbesondere letztere schmelzen auch bei hohen Temperaturen nicht und bleiben form- und dimensionsstabil. Sie sind druckfest, langlebig, Wasser abweisend und gegenüber fast allen Bauchemikalien beständig.

Da die Wasserstoffbildungsreaktion exotherm ist und in dem Behälter 6 selbst stattfindet, wird auf diese Weise die thermische Energie im Behälter gehalten und führt zu einer Temperaturerhöhung der Suspension. Mit dieser Temperaturerhöhung geht sowohl eine Reaktionsbeschleunigung einher als auch eine Erhöhung der erzielbaren freigesetzten Gasmenge. Ein Rührwerk in dem Behälter 6 hält die Suspension kontinuierlich in Bewegung und sorgt sowohl für einen thermischen Ausgleich als auch eine Reaktionsbeschleunigung und verhindert außerdem eine Entmischung der Suspension. In dieser Ausführungsform ist in dem Behälter 6 außerdem eine zuschaltbare Heizeinrichtung in Gestalt von Heizschlangen angeordnet. Da sich diese Anlage üblicherweise im Freien befindet, ist eine klimatische Veränderung und Abkühlung des Behälters 6 bei entsprechenden Wetterbedingungen nur durch eine Zuheizung in kalten Betriebsmonaten zu kompensieren. Grundsätzlich ist es jedoch erfindungsgemäß auch möglich, auf eine Zuheizung gänzlich zu verzichten oder eine solche Zuheizung grundsätzlich immer vorzusehen.

Außerdem können auch die vorgeschalteten Behälter, beispielsweise der Vorbehälter 5 thermisch isoliert sein. Die Ausgasung in dem Behälter 6 erfolgt in die Umgebungsluft, da es sich um ein ökologisch unbedenkliches Gas handelt. Nach dem Ausgasen wird die Suspension in einen Hohlraum gepumpt. Gemäß dem hier gezeigten Ausführungsbeispiel handelt es sich dabei um eine solegefüllte Kaverne 10. Dazu kann beispielsweise eine Tiefenbohrung mit Innenverrohrung und Außenverrohrung vorgesehen werden. Das Material der Dickstoffsuspension wird in die Kaverne gepumpt, außerdem wird aus der Kaverne dickstofflose Sole herausgepumpt und z.B. in einem Pufferbehälter 12 gespeichert oder zur langfristigen Speicherung in einem Vorratsbehälter 13 eingebracht.

Durch die thermische Isolierung und die in diesem Beispiel zumindest zeitweise Zuheizung in dem Behälter 6 wird erreicht, dass ein sehr weitgehend wasserstoffentgastes Dickstoffgemisch als Suspension in die Kaverne gepumpt wird. Auf diese Weise kann der Bezugsprozess der Sole aus der Kaverne verbessert werden und außerdem die Verweildauer der Dickstoffsuspension in den Ausgasungsbehälter wesentlich verkürzt werden.

## Patentansprüche

1. Verfahren zum Betreiben von Bergversatzanlagen zum langzeitsicheren Verfüllen von unterirdischen Hohlräumen mit abfallbasierten Baustoffen nach Rezepturvorgabe, wobei das Verfahren die Schritte umfasst:
Anmischen einer Baustoffsuspension gemäß Rezeptvorgabe, wobei wenigstens einer Mischungskomponente mit einem Wasserstoffbildungspotenzial ein flüssiges Suspensionsmittel zugemischt wird,
Ausgasen der Baustoffsuspension für eine vorgegebene Zeitdauer in einem Ausgasungsbehälter (6),
und Fördern des ausgegasten Baustoffes in ein einen unterirdischen Hohlraum (10),
**dadurch gekennzeichnet, dass**
als Ausgasungsbehälter (6) ein mit thermischer Dämmung versehener Behälter verwendet wird, so dass die Abgabe von Reaktionswärme der Wasserstoffbildungsreaktion an die Behälterumgebung gehemmt wird.

2. Verfahren nach Anspruch 1, wobei die Baustoffsuspension während des Ausgasens zumindest zeitweise gerührt wird.

3. Verfahren nach Anspruch 1 oder 2, wobei die Baustoffsuspension als Suspension in den Hohlraum gefördert wird, vorzugsweise gepumpt wird.

4. Verfahren nach Anspruch 1 oder 2, wobei die Baustoffsuspension vor dem Fördern in einen Hohlraum wenigstens einem weiteren Verarbeitungsschritt zugeführt wird, wobei der Verarbeitungsschritt vorzugsweise eine Trocknungsschritt ist.

5. Verfahren nach einem der Ansprüche 1 bis 4, wobei die Baustoffsuspension während des Ausgasens mit Hilfe einer Heizeinreichung beheizt wird.

6. Verfahren nach Anspruch 5, wobei die Baustoffsuspension während der Ausgasungsphase auf eine Temperatur gebracht wird, die wenigstens 20°C, vorzugsweise wenigstens 40°C über der Umgebungstemperatur des Behälters liegt.

7. Baustoffversatzanlage mit
wenigstens einem Behälter (1a, 1b, 1c) für einen Feststoff und
wenigstens einer Mischungseinrichtung (4) sowie einem Behälter (6) zur Aufnahme einer angemischten Baustoffsuspension,
wenigstens einer Fördereinrichtung, um die Baustoffsuspension aus dem Behälter in einen unterirdischen Hohlraum (10) einzubringen,
**dadurch gekennzeichnet,**
**dass** der Behälter (6) eine thermische Isolation in Gestalt einer Wärmedämmung aufweist, um eine eingebrachte Baustoffsuspension gegenüber der Umgebung thermisch zu isolieren.

8. Baustoffversatzanlage nach Anspruch 7, wobei der Behälter (6) ein Rührwerk aufweist, um die Baustoffsuspension zu Rühren.

9. Baustoffversatzanlage nach Anspruch 7 oder 8, wobei eine Heizeinrichtung vorgesehen ist, welche mit dem Behälter (6) derart gekoppelt ist, dass die Baustoffsuspension in dem Behälter beheizbar ist.

## Claims

1. A method for operating backfill plants for the long-term safe filling of underground cavities with waste-based building materials according to a specified formulation, wherein the method comprises the steps:
mixing a building material suspension according to a specified formulation, wherein a liquid suspension agent is added to at least one mixing component with a hydrogen-forming potential,
outgassing of the building material suspension for a preset time in an outgassing container (6),
and delivering the outgassed building material into an underground cavity (10),
**characterised in that**
a container provided with thermal insulation is used as outgassing container (6), so that the release of the heat of reaction of the hydrogen-forming reaction to the container surroundings is inhibited.

2. The method according to claim 1, wherein the building material suspension is agitated at least temporarily during the outgassing.

3. The method according to claim 1 or 2, wherein the building material suspension is delivered, preferably pumped, as a suspension into the cavity.

4. The method according to claim 1 or 2, wherein the building material suspension is fed to at least one further processing step before the delivery into a cavity, wherein the processing step is preferably a drying step.

5. The method according to any one of claims 1 to 4, wherein the building material suspension is heated with the aid of a heating device during the outgassing.

6. The method according to claim 5, wherein the building material suspension, during the outgassing phase, is brought to a temperature which lies at least 20°C, preferably at least 40°C above the ambient temperature around the container.

7. A building material backfill plant with
at least one container (1a, 1b, 1c) for a solid and
at least one mixing device (4) and a container (6) for accommodating a mixed building material suspension,
at least one delivery device in order to introduce the building material suspension from the container into an underground cavity (10),
**characterised in that**
the container (6) comprises a thermal insulation in the form of heat insulation, in order to insulate an introduced building material suspension thermally against the surroundings.

8. The building material backfill plant according to claim 7, wherein the container (6) comprises an agitator apparatus in order to agitate the building material suspension.

9. The building material backfill plant according to claim 7 or 8, wherein a heating device is provided, which is coupled with the container (6) in such a way that the building material suspension can be heated in the container.

## Revendications

1. Procédé destiné à exploiter des installations de remblayage de mines, pour remplir de manière sûre à long terme des cavités souterraines avec des matériaux de construction basés sur des déchets selon une prescription de formulation, le procédé comprenant les étapes suivantes :
gâchage d'une suspension de matériaux de construction selon une prescription de formulation, alors qu'à au moins un composant du mélange avec un potentiel de dégagement d'hydrogène, on mélange un produit liquide en suspension,
dégazage de la suspension de matériaux de construction sur une période prédéfinie dans un réservoir de dégazage (6),
et transport du matériau de construction dégazé dans une cavité (10) souterraine,
**caractérisé en ce**
**qu'**en tant que réservoir de dégazage (6), on utilise un réservoir doté d'une isolation thermique, de sorte que la restitution de chaleur de réaction de la réaction de dégagement d'hydrogène à l'environnement du réservoir soit inhibée.

2. Procédé selon la revendication 1, lors duquel on agite au moins temporairement la suspension de matériaux de construction pendant le dégazage.

3. Procédé selon la revendication 1 ou la revendication 2, lors duquel on transporte, on pompe de préférence la suspension de matériaux de construction sous forme de suspension dans la cavité.

4. Procédé selon la revendication 1 ou la revendication 2, lors duquel avant le transport dans une cavité, on alimente la suspension de matériaux de construction vers une étape de traitement supplémentaire, l'étape de traitement étant de préférence une étape de séchage.

5. Procédé selon l'une quelconque des revendications 1 à 4, lors duquel on chauffe la suspension de matériaux de construction pendant le dégazage à l'aide d'un dispositif de chauffage.

6. Procédé selon la revendication 5, lors duquel pendant la phase de dégazage, on amène la suspension de matériaux de construction à une température qui est supérieure d'au moins 20°C, de préférence d'au moins 40°C à la température environnementale du réservoir.

7. Installation de remblayage de matériaux de construction, avec
au moins un réservoir (1a, 1b, 1c) pour une matière solide et
au moins un dispositif de mélange (4), ainsi qu'un réservoir (6) destiné à recevoir une suspension de matériaux de construction gâchée,
au moins un dispositif de transport, pour introduire la suspension de matériaux de construction hors du réservoir dans une cavité (10) souterraine,
**caractérisée en ce que**
le réservoir (6) comporte une isolation thermique sous la forme d'un calorifugeage, pour assurer l'isolation thermique d'une suspension de matériaux de construction introduite par rapport à l'environnement.

8. Installation de remblayage de matériaux de construction selon la revendication 7, le réservoir (6) comportant un agitateur pour agiter la suspension de matériaux de construction.

9. Installation de remblayage de matériaux de construction selon la revendication 7 ou la revendication 8, un dispositif de chauffage étant prévu, lequel est accouplé au réservoir (6) de telle sorte que la suspension de matériaux de construction puisse être chauffée dans le réservoir.
